# EUROPEAN PATENT SPECIFICATION

(11) **EP 3 739 749 B1**
(45) Date of publication and mention of the grant of the patent: **28.02.2024**
(21) Application number: 19305620.7
(22) Date of filing: 15.05.2019
(51) Int. Cl.: H02S 40/34

(54) **PHOTOVOLTAIC MODULE AND ASSEMBLY**
FOTOVOLTAISCHES MODUL UND ANORDNUNG
MODULE ET ENSEMBLE PHOTOVOLTAÏQUE

(43) Date of publication of application: 18.11.2020
(73) Proprietor: Total Solar, 92400 Courbevoie (FR)
(72) Inventor: CASSAGNE, Valérick, 91470 LIMOURS (FR)
(74) Representative: Innovincia

(56) References cited:
- EP-A2- 0 828 034
- WO-A2-2010/084293
- FR-A1- 3 046 296
- FR-A1- 3 073 106
- US-A1- 2015 326 177

## Description

The present invention relates to a photovoltaic assembly, in particular for installation on a sloped roof. The photovoltaic assembly comprises photovoltaic modules with photovoltaic cells for generating electrical power from solar radiation, and different cables and electrical devices for collecting the generated electrical current.

An important portion of habitat buildings, among others, comprise sloped roofs. The sloped roofs can be made of corrugated metal sheet, tiles etc. The sloped roofs offer an interesting surface for the installation of photovoltaic modules. The slope of the roof allows evacuation of rainwater falling on said roof.

Photovoltaic modules comprise a flat support sheet or plate, photovoltaic cells and connecting elements such as junction boxes. They allow for generation of electrical current using solar radiation. The installation of photovoltaic modules on roofs offers economically and ecologically interesting power for light, heat and appliances, either as primary electric power source or as a secondary, supplementary source.

The photovoltaic modules are then integrated in a photovoltaic assembly, comprising a plurality of modules, connection cables, adapters and additional structural elements such as struts, spacers and frames. It is known to place the photovoltaic modules against the roof surface to minimize sheltered space underneath said modules where filth and small animals can find shelter.

In particular on roof membranes or on corrugated metal sheets, the weight of the photovoltaic assembly must often be reduced. It is known to install laminated photovoltaic modules directly on the surface, preferably by gluing to avoid any penetration in the roof. Light laminated modules are obtained by laminating the photovoltaic cells between protective plastic sheets with encapsulating resin. In this case to avoid specific CMS shape or holes in the roofing materials, the junction box and the cables are placed on the upfront side i.e. the sunny side.

The photovoltaic modules are in particular arranged in lines and columns. To interconnect the modules of a horizontal line, cables are arranged between them, with a sensibly horizontal direction, perpendicular to the slope.

Such a photovoltaic assembly with photovoltaic modules is disclosed in document US 2015/0326177 A1.

The horizontally arranged cables against the roof or module surface form obstacles to the water flow, which occurs parallel to the slope. In particular, debris and particles, for example of decaying tree leaves, can consequently accumulate against the cables, clogging the water flow under said cables. The accumulated matter and humidity against the cable accelerates the degradation of said cables, while pooling water can end up covering a portion of the photovoltaic cells, smudging the front surface above the cells.

The life expectancy of the module is consequently shortened, while the overall electrical efficiency of the photovoltaic assembly is reduced.

In particular, in the case of corrugated metal sheet roofs where the photovoltaic modules are installed at the bottom of trenches separated by ridges, the horizontal cables and the ridges form in combination important pooling spaces for rainwater. The installation of horizontal cables over the ridges is technically complicated and not aesthetic, while the cables on top of the ridges generate a bigger shadow.

In order to overcome the aforementioned drawbacks, the invention proposes a photovoltaic assembly for installation on a sloped roof, according to claim 1.

This particular architecture with cables parallel to the water flow along the slope reduces the spots where said water and organic matter carried by the water accumulates for longer periods.

The photovoltaic assembly according to the invention may also present one or more of the following features taken separately or in combination.

The photovoltaic cells may be arranged in columns, parallel to the slope sides, with at least one connecting electric track comprising connection segments connecting one photovoltaic cell to the next in a column of photovoltaic cells and the first respectively last photovoltaic cell of the first respectively last column of the arrangement to a junction box, and U-shapes, connecting the last photovoltaic cell of a column to the first photovoltaic cell of the next column in the arrangement.

The photovoltaic modules may comprise an uneven number of photovoltaic cell columns.

The photovoltaic cells may be arranged in lines, parallel to the horizontal sides, with at least one connecting electric track comprising connection segments connecting one photovoltaic cell to the next in a line of photovoltaic cells and the first respectively last photovoltaic cell of the first respectively last line of the arrangement to a junction box, and U-shapes, connecting the last photovoltaic cell of a line to the first photovoltaic cell of the next line in the arrangement.

The photovoltaic modules may comprise an even number of photovoltaic cell lines.

The assembly may comprise one return cable for each column of photovoltaic modules, which runs parallel to the slope sides of photovoltaic modules, connecting a junction box of the last photovoltaic module of the column or line to an electric collector or to a junction box of the first photovoltaic module of a next column or line.

The return cable and at least portions of the connecting cables may be enclosed inside a cable sheath, the cable sheath being parallel to the slope sides of the photovoltaic modules.

The photovoltaic modules may comprise a return electric track, embedded in the module and parallel to the slope side, wherein :
- the return electric track of one module is connected to the return electric track of the next module in the column,
- the return electric track of the first photovoltaic module in a column being also connected to a collecting cable, and
- the return electric track of the last photovoltaic module in a column being connected to a junction box of said last photovoltaic module of the column.

The invention also relates to a photovoltaic module for use in a photovoltaic assembly according to claim 9.

The photovoltaic cells may be arranged in an uneven number of columns, parallel to the slope sides, with at least one connecting electric track comprising connection segments connecting one photovoltaic cell to the next photovoltaic cell in a column and the first respectively last photovoltaic cell of the first respectively last column of the arrangement to a junction box, and U-shapes, connecting the last photovoltaic cell of a column to the first photovoltaic cell of the next column in the arrangement.

The photovoltaic cells may be arranged in an even number of lines, parallel to horizontal sides of the laminate, with at least one connecting electric track comprising connection segments connecting one photovoltaic cell to the next photovoltaic cell in a line and the first respectively last photovoltaic cell of the first respectively last line of the arrangement to a junction box, and U-shapes, connecting the last photovoltaic cell of a line to the first photovoltaic cell of the next line in the arrangement.

The photovoltaic module may comprise a return electric track, parallel to its slope side.

Finally, the invention also concerns a corrugated sheet, for installation on a roof or structure, characterized in that it comprises at least one photovoltaic module as described above, attached to its upper side, with the slope sides parallel to ridges of the corrugated sheet.

Other characteristics and features of the invention will become apparent in the description hereafter, given in an exemplary and non-limiting fashion, in combination with the figures, among which:
- figure 1 is a schematic view of part of a photovoltaic assembly according to one embodiment of the invention,
- figures 2a, 2b are a schematic view of a single module of the assembly of figure 1,
- figure 3 is a schematic view of a single module of another embodiment of the assembly according to the invention,
- figure 4 is a schematic view of a single module of yet another embodiment of the assembly according to the invention,
- figure 5 is a partial view of the interface between two modules of an assembly,
- figure 6 is a cut-away view of the assembly arranged on a corrugated metal sheet.

The description refers to particular embodiments, represented in the figures. In particular, the same reference applies to the same element or an equivalent element in all embodiments. Also, different embodiments can be obtained by slightly modifying or combining the different embodiments.

Adjectives and characteristics such as "above" "under" "horizontal" "vertical" etc. are given in relationship with the figures and/or the direction of e.g. rainwater flowing under the effect of gravity when considering the assembly installed on a sloped roof.

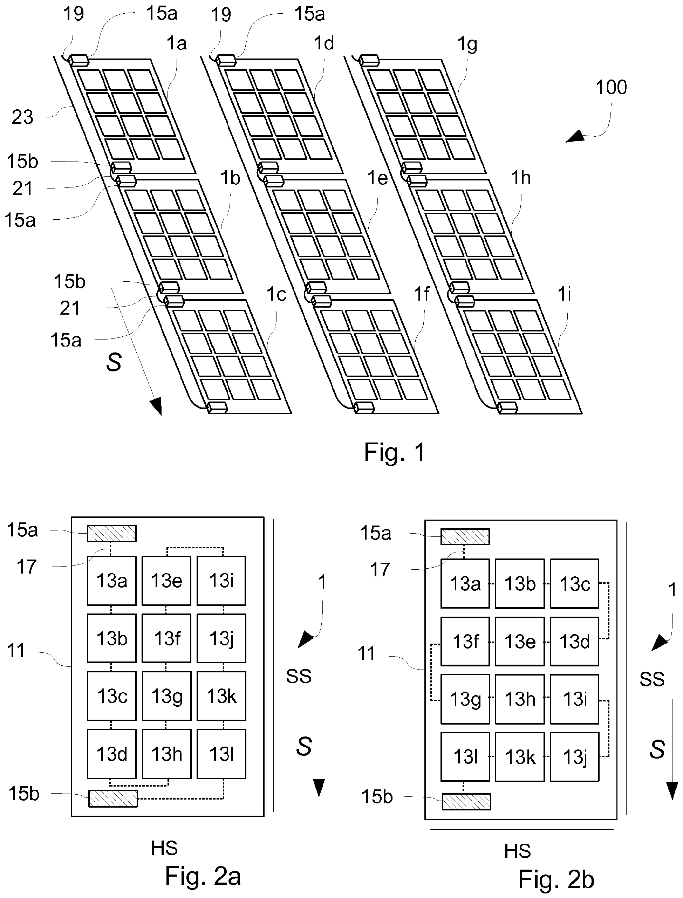

Figure 1 is a schematic representation in perspective of a photovoltaic assembly 100, arranged on a sloped roof. The roof is for example the sloped roof of a habitat, storage or other building such as a house, garage, hut, storage unit etc.

The sloping direction, meaning the direction in which declivity is maximal, is represented by an arrow S. The sloping direction S also corresponds to the mean flowing direction of rainwater under normal conditions.

The photovoltaic assembly 100 comprises a plurality of photovoltaic modules labelled 1a, 1b, 1c etc. In particular, the modules 1a, 1b, 1c etc. are arranged in columns along the sloping direction S. The reference 1 is used to designate any photovoltaic module without consideration of order in the assembly 100.

In figure 1, the assembly 100 comprises three columns, comprising each three modules labelled 1a to 1i. The columns are then connected either in series or parallel according to the desired voltage and current.

A single module, labelled 1, is represented in front view in figure 2. The module 1 comprises a module body in form of a laminate 11 of rectangular shape, with two slope sides SS, parallel to the sloping direction S when installed, and two horizontal sides HS perpendicular to the sloping direction S.

The module 1 comprises photovoltaic cells 13a, 13b etc. arranged in columns, parallel to the sloping direction S, and here in particular in rows parallel to the horizontal sides HS. The reference 13 is used to designate any photovoltaic cell in a module without consideration of position in said module.

The photovoltaic cells 13a, 13b etc. are for example monocrystalline silicon cells, thin enough (few tens or hundreds of micrometres) so as to remain flexible in that a curvature can be applied to them without loss of structural and electric properties. The laminate 11 may then in particular be a flexible sheet, and the cells 13a, 13b etc. are laminated to form the laminate 11 with encapsulating resin and a transparent front sheet to form the photovoltaic module 1.

The represented embodiment in figure 2a comprises twelve photovoltaic cells labelled 13a to 13l. Said cells 13a to 13l are arranged in three columns of each four cells.

The module 1 also comprises two junction boxes 15a, 15b, comprising a first junction box 15a attached respectively at the corner between one of the slope sides SS and a first, upper, horizontal side HS, and a second junction box 15b at the corner between the slope side SS and the second, lower, horizontal side HS.

In particular, the junction boxes 15a, 15b are placed on the same horizontal side (along a single slope side SS) of the laminate 11. The junction boxes 15a, 15b are monopole junction boxes.

The junction boxes 15a, 15b and the cells 13a to 13l in figure 2 are connected through one connecting electric track 17. The electric track 17 comprises for example metallic ribbons encapsulated with the cells 13a to 13l.

The electric track 17 comprises connection segments connecting one photovoltaic cell 13a to 13k to the next in a column (13b to 13l). Two connecting segments connect for one the first photovoltaic cell 13a of the first column to the first junction box 15a, and for the other the last cell 13l of the last column to the second junction box 15b.

Portions of the electric track 17 are formed as U-shapes, connecting the last cell (13d, 13h) of a column to the first cell (13e, 13i) of the next column. In figure 2, the first and third columns have their cells 13a, 13b etc. labelled from top to bottom (in figure 2), while the second column has its cells 13e to 13h labelled from bottom to top.

More generally, using the order as illustrated in figure 2a, uneven columns would have their cells 13a, 13b etc. labelled from top to bottom, while even columns would have them labelled from bottom to top.

The cells 13a, 13b etc. are consequently connected in series, with the connecting electric track 17 forming a zigzag over the successive columns of cells 13a, 13b etc.

The arrangement with an odd number of cell columns (here three) ensures that the last cell 13l is on the same vertical side of the laminate 11 as the second junction box 15b, while the first cell 13a is on the same side as the first junction box 15a.

Figure 2b transposes the considerations of figure 2a to a connection of the cells connected in lines parallel to the horizontal sides HS, with an even number of lines.

The represented embodiment in figure 2b comprises twelve photovoltaic cells labelled 13a to 131. Said cells 13a to 13l are arranged in four lines of each three cells.

The module 1 also comprises a first junction box 15a placed respectively at the corner between one of the slope sides SS and a first, upper, horizontal side HS, and a second junction box 15b at the corner between the slope side SS and the second, lower, horizontal side HS, placed on the same horizontal side (along a single slope side SS) of the laminate 11.

The junction boxes 15a, 15b and the cells 13a to 13l in figure 2 are connected through one connecting electric track 17. The electric track 17 comprises for example metallic ribbons encapsulated with the cells 13a to 13l.

The electric track 17 comprises connection segments connecting one photovoltaic cell 13a to 13k to the next in a line (13b to 13l). Two connecting segments connect for one the first photovoltaic cell 13a of the first line to the first junction box 15a, and for the other the last cell 13l of the last line to the second junction box 15b.

Portions of the electric track 17 are formed as U-shapes, connecting the last cell (13c, 13h) of a line to the first cell (13d, 13i) of the next line. In figure 2b, the first and third lines have their cells labelled from left to right (in figure 2), while the second and fourth lines have their cells labelled from right to left.

By having an even number of lines, the last cell 13l is close to the second junction box 15b, and therefore a shorter electric track 17 is needed.

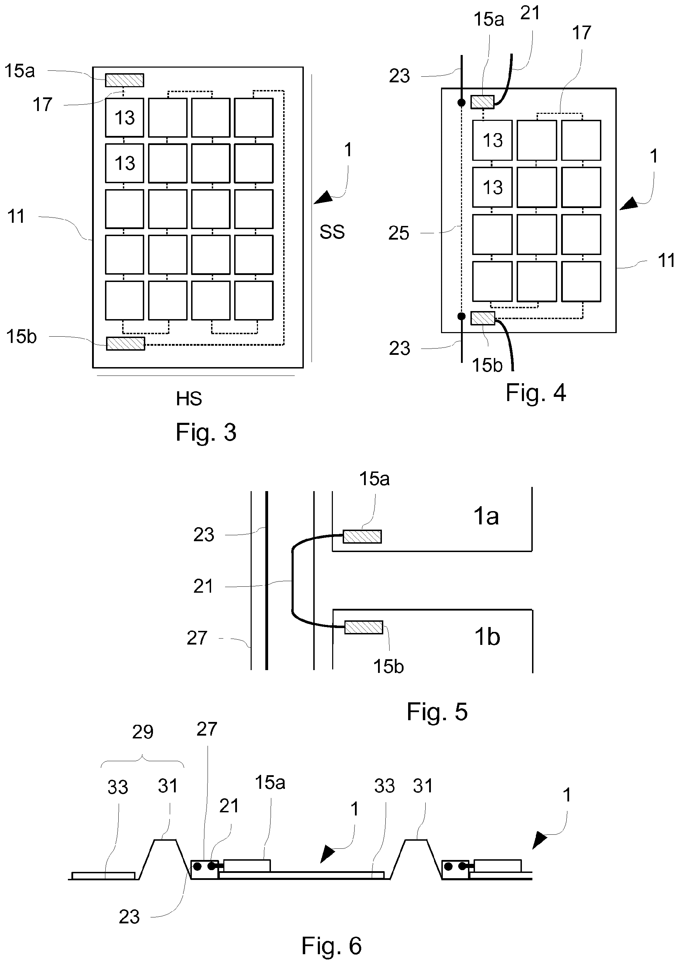

Figure 3 illustrates the case of a module with four (even number) columns. An additional length of connecting electric track 17 is consequently needed to connect the last cell 13 of the last column to the second junction box 15b, the two being diagonally opposed on the laminate 11.

Other connection patterns, for example connecting the cells 13a, 13b etc. in lines or columns connected in parallel to reach a specific current and voltage output are also possible.

Visible on figure 1 are connection cables 21 which connect the modules 1a, 1b etc. through their respective junction boxes 15a, 15b. In particular, the connection cables 21 connect the second junction box 15b of a module 1a to the first junction box 15a of the next module 1b in a column.

Collecting cables 19 connect the modules 1a, 1b etc. to an electric collector (not represented) to adapt or store the electric power generated by the photovoltaic assembly 100. In particular, in the represented embodiment of figure 1, the collecting cables 19 comprise cables connected to the first junction box 15a of the first module 1a, 1d, 1g of each column. In figure 1, the return cable 23 is represented going upward but it can go downward.

A return cable 23 is connected to the second junction box 15b of the last module 1c, 1f, 1i in a column to the electric collector. The major portion of the return cable 23 runs in particular parallel to the slope sides SS of the laminates 11, along the column of modules 1a, 1b etc. This solution prevents creating induction loops as stated by professional rules.

Figure 4 is a schematic representation of a single module 1, in which the return cable 23 is embedded by segments inside the module 1a, 1b etc.

In particular, the photovoltaic module 1 comprises a return electric track 25, embedded in the module 1, for example a metallic ribbon laminated in the same layer as the cells 13 and parallel to the slope side SS.

Connection means, such as secondary junction boxes or sockets form the ends of the return electric track 25.

When assembled the return electric track 25 of one module 1a is connected to the return electric track 25 of the next module 1b in the column. The electric return track 25 of the first photovoltaic module 1a in a column is also connected to a collecting cable 19, and further to the electric collector. The return electric track 25 of the last photovoltaic module 1c, 1f, 1i in a column is connected to the second junction box 15b of said last photovoltaic module 1c, 1f, 1i of the column.

To reduce horizontal width of the laminate, the track 25 can pass below the cells, isolated from them by an insulating layer.

Such architecture reduces the length of apparent return cable 23, while offering a modular photovoltaic assembly 100 that is easy to assemble.

Figure 5 shows a portion of another particular embodiment of a photovoltaic assembly 100, in particular the area between two successive modules 1a, 1b. In particular only the lower portion of the first module 1a and the upper portion of the second 1b are visible.

The junction boxes 15a, 15b of the two represented modules 1a, 1b are in particular parallelepipedic with two faces which are parallel to the slope sides SS of the laminate 11. The connection cables 21 are connected to one face parallel to the slope sides SS that faces outwards of the modules 1a, 1b, via connection means such as sockets.

This way, there is no horizontal dam, it prevents any water retention and stagnation on the front surface.

The connection cables 21 and the return cable 23 are in particular enclosed, at least partially in a sheath 27, that runs parallel to the slope sides SS for additional protection.

The sheath 27 is for example a deformable polymer sheath with closing lips, or a rigid cable tray. In particular, reversible closing means allow maintenance and repair by replacement of the contained cables 21, 23.

Figure 6 is a cutaway view of a corrugated sheet 29, on which the assembly 100 according to figure 5 is installed. In particular, the cutaway plane in perpendicular to the sloping direction S.

The corrugated sheet comprises ridges 31 parallel to the sloping direction S and flat portions 33 between the ridges 31. For example, the corrugated sheet may be a corrugated metal sheet which can be made of steel, aluminium, zinc, polymer etc. or a corrugated sheet of composite based material (e.g. glass fibres and resin).

The photovoltaic modules 1 and the cable sheaths 27 are placed on the flat portions 33. In particular, the cables 21, 23 are placed close to the bottom of a ridge 31, even in embodiments without a cable sheath 27, so as to minimize their visual impact. Placing the cable sheath 27 close to the bottom of a ridge 31 further reduces the shadow it may cast on the photovoltaic module 1 while improving the aesthetic aspect of the assembly 100.

The photovoltaic module 1 according to the invention is particularly suitable for photovoltaic assemblies 100 in columns parallel to the sloping direction S. The particular position of the junction boxes 15a, 15b allows for a reduced length of connecting cables 21 of horizontal or near horizontal direction. The water flow on the modules 1 of such an assembly is therefore streamlined, and less stagnant water remains even if debris such as fallen leaves is present.

In particular, on a corrugated sheet, the photovoltaic assembly 100 is discretely and efficiently integrated. Photovoltaic modules 1 can be attached directly to the corrugated sheet 29, for example by gluing, with their slope sides SS parallel to ridges 31 of the corrugated sheet 29. The photovoltaic modules 1 are in particular attached or glued to the upper side of the corrugated sheet 29, which is the side that will, when installed, be facing the sky and receive the sunlight.

The corrugated sheets 29 with attached modules 1 can be stored, shipped and handled individually with ease. The installation of the corrugated sheets 29 on a roof or structure is then followed by the installation of the connection and return cables 21, 23, thus leading to the finished photovoltaic assembly 100.

## Claims

1. Photovoltaic assembly (100) for installation on a sloped roof, comprising
• a plurality of photovoltaic modules (1a, 1b,...), arranged in at least one column parallel to the slope (S), each photovoltaic module (1a, 1b,...) comprising:
▪ a laminate (11) of rectangular shape, with two slope sides (SS) to be placed parallel to the slope (S) of the roof and two horizontal sides (HS) to be placed perpendicular to the slope (S),
▪ a plurality of photovoltaic cells (13), disposed in the laminate (11),
▪ at least two monopole junction boxes (15a, 15b) arranged on the side facing the sun of the photovoltaic modules and comprising a first junction box (15a) attached respectively at the corner between one of the first or second slope side (SS) and a first horizontal side (HS), and a second junction box (15b) attached at the corner between the same first or second slope side (SS) and the second horizontal side (HS), connected to the photovoltaic cells (13), the junction boxes (15a, 15b) of the photovoltaic modules (1a, 1b,...) being close to the same slope side (SS) of the photovoltaic modules (1a, 1b,...),
• connection cables (21), spanning between the second junction box (15b) of a photovoltaic module (1a, 1b,...) and the first junction box (15a) of the next photovoltaic module (1a, 1b,...) in the photovoltaic module column,
• collecting cables (19), configured to connect the photovoltaic modules (1a, 1b,...) to an electric collector.

2. Photovoltaic assembly according to claim 1, **characterized in that** the photovoltaic cells (13) are arranged in columns, parallel to the slope sides, with at least one connecting electric track (17) comprising connection segments connecting one photovoltaic cell (13a) to the next (13b) in a column of photovoltaic cells (13) and the first respectively last photovoltaic cell (13a, 13b,...) of the first respectively last column of the arrangement to a junction box, and U-shapes, connecting the last photovoltaic cell (13a, 13b,...) of a column to the first photovoltaic cell (13a, 13b,...) of the next column in the arrangement.

3. Photovoltaic assembly according to claim 2, **characterized in that** the photovoltaic modules (1a, 1b,...) comprise an uneven number of photovoltaic cell (13) columns.

4. Photovoltaic assembly according to claim 1, **characterized in that** it comprises one return cable (23) for each column of photovoltaic modules (1a, 1b,...), which runs parallel to the slope sides of photovoltaic modules (1a, 1b,...), connecting the second junction box (15b) of the last photovoltaic module (1a, 1b,...) of the column to an electric collector or to the first module of a next row.

5. Photovoltaic assembly according to claim 1, **characterized in that** the photovoltaic cells (13) are arranged in lines, parallel to the horizontal sides, with at least one connecting electric track (17) comprising connection segments connecting one photovoltaic cell (13a) to the next (13b) in a line of photovoltaic cells (13) and the first respectively last photovoltaic cell (13a, 13b,...) of the first respectively last line of the arrangement to a junction box, and U-shapes, connecting the last photovoltaic cell (13a, 13b,...) of a line to the first photovoltaic cell (13a, 13b,...) of the next line in the arrangement.

6. Photovoltaic assembly according to claim 5, **characterized in that** the photovoltaic modules (1a, 1b,...) comprise an even number of photovoltaic cell (13) lines.

7. Photovoltaic assembly according to the preceding claim, **characterized in that** the return cable (23) and at least portions of the connecting cables (21) are enclosed inside a cable sheath (27), the cable sheath (27) being parallel to the slope sides of the photovoltaic modules (1a, 1b,...).

8. Photovoltaic assembly according to any of claims 1 to 6, **characterized in that** the photovoltaic modules comprise a return electric track (25), embedded in the module (1a, 1b,...) and parallel to the slope side, wherein :
• the return electric track (25) of one module is connected to the return electric track (25) of the next module (1a, 1b,...) in the column,
• the return electric track of the first photovoltaic module (1a) in a column being also connected to a collecting cable (19), and
• the return electric track (25) of the last photovoltaic module (1a, 1b,...) in a column being connected to the second junction box (15b) of said last photovoltaic module (1a, 1b,...) of the column.

9. Photovoltaic module for use in a photovoltaic assembly according to any of the preceding claims, **characterized in that** it comprises :
▪ a laminate (11) of rectangular shape, with two slope sides (SS) placed, when installed, parallel to the slope (S) of the roof and two horizontal sides (HS) to be placed, when installed, perpendicular to the slope (S),
▪ a plurality of photovoltaic cells (13), disposed in the laminate (11),
▪ at least two monopole junction boxes (15a, 15b) arranged on the side facing the sun of the photovoltaic modules and comprising a first junction box (15a) attached respectively at the corner between one of the first or second slope side (SS) and a first horizontal side (HS), and a second junction box (15b) attached at the corner between the same first or second slope side (SS) and the second horizontal side (HS), connected to the photovoltaic cells (13), the junction boxes (15a, 15b) of the photovoltaic module (1a, 1b,...) being close to the same slope side (SS) of the photovoltaic module (1a, 1b,...).

10. Photovoltaic module according to the preceding claim, **characterized in that** the photovoltaic cells (13a, 13b,...) are arranged in an uneven number of columns, parallel to the slope sides (SS), with at least one connecting electric track (17) comprising connection segments connecting one photovoltaic cell (13a, 13b,...) to the next photovoltaic cell (13a, 13b,...) in a column and the first respectively last photovoltaic cell (13a, 13b,...) of the first respectively last column of the arrangement to a junction box (15a, 15b), and U-shapes, connecting the last photovoltaic cell (13a, 13b,...) of a column to the first photovoltaic cell (13a, 13b,...) of the next column in the arrangement.

11. Photovoltaic module according to claim 8, **characterized in that** the photovoltaic cells (13a, 13b,...) are arranged in an even number of lines, parallel to the horizontal sides (HS), with at least one connecting electric track (17) comprising connection segments connecting one photovoltaic cell (13a, 13b,...) to the next photovoltaic cell (13a, 13b,...) in a line and the first respectively last photovoltaic cell (13a, 13b,...) of the first respectively last line of the arrangement to a junction box (15a, 15b), and U-shapes, connecting the last photovoltaic cell (13a, 13b,...) of a line to the first photovoltaic cell (13a, 13b,...) of the next line in the arrangement.

12. Photovoltaic module according to any claims 8 to 10, **characterized in that** the photovoltaic modules comprises a return electric track (25), parallel to its slope side (SS).

13. Corrugated sheet, for installation on a roof or structure, **characterized in that** it comprises at least one photovoltaic module (1a, 1b,..)according to any of claim 8 to 11, attached to its upper side, with the slope sides (SS) parallel to ridges (31) of the corrugated sheet (29).

## Patentansprüche

1. Photovoltaikanordnung (100) zur Installation auf einem schrägen Dach, umfassend
• eine Vielzahl von Photovoltaikmodulen (1a, 1b,...), eingerichtet in mindestens einer Spalte parallel zu der Schräge (S), wobei jedes Photovoltaikmodul (1a, 1b,...) Folgendes umfasst:
▪ ein Laminat (11) von rechteckiger Form, mit zwei Schrägseiten (SS), die parallel zu der Schräge (S) des Dachs platziert werden sollen, und zwei Horizontalseiten (HS), die senkrecht zu der Schräge (S) platziert werden sollen,
▪ eine Vielzahl von Photovoltaikzellen (13), die in dem Laminat (11) angeordnet sind,
▪ mindestens zwei Monopolanschlusskästen (15a, 15b), eingerichtet auf der der Sonne zugewandten Seite der Photovoltaikmodule und umfassend einen ersten Anschlusskasten (15a), angebracht jeweils an der Ecke zwischen der ersten oder der zweiten Schrägseite (SS) und einer ersten Horizontalseite (HS), und einen zweiten Anschlusskasten (15b), angebracht an der Ecke zwischen derselben ersten oder zweiten Schrägseite (SS) und der zweiten Horizontalseite (HS), verbunden mit den Photovoltaikzellen (13), wobei sich die Anschlusskästen (15a, 15b) der Photovoltaikmodule (1a, 1b,...) dicht an derselben Schrägseite (SS) der Photovoltaikmodule (1a, 1b,...) befinden,
• Verbindungskabel (21), die sich zwischen dem zweiten Anschlusskasten (15b) eines Photovoltaikmoduls (1a, 1b,...) und dem ersten Anschlusskasten (15a) des nächsten Photovoltaikmoduls (1a, 1b,...) in der Photovoltaikmodulspalte aufspannen,
• Sammelkabel (19), ausgelegt zum Verbinden der Photovoltaikmodule (1a, 1b,...) mit einem Elektrosammler.

2. Photovoltaikanordnung nach Anspruch 1, **dadurch gekennzeichnet, dass** die Photovoltaikzellen (13) in Spalten parallel zu den Schrägseiten eingerichtet sind, mit mindestens einer verbindenden Elektroschiene (17), umfassend Verbindungssegmente, die eine Photovoltaikzelle (13a) mit der nächsten (13b) in einer Spalte von Photovoltaikzellen (13) und die erste bzw. letzte Photovoltaikzelle (13a, 13b,...) der ersten bzw. letzten Spalte der Anordnung mit einem Anschlusskasten verbinden, und U-Profile, die die letzte Photovoltaikzelle (13a, 13b,...) einer Spalte mit der ersten Photovoltaikzelle (13a, 13b,...) der nächsten Spalte in der Anordnung verbinden.

3. Photovoltaikanordnung nach Anspruch 2, **dadurch gekennzeichnet, dass** die Photovoltaikmodule (1a, 1b,...) eine ungerade Anzahl von Spalten von Photovoltaikzellen (13) umfassen.

4. Photovoltaikanordnung nach Anspruch 1, **dadurch gekennzeichnet, dass** sie ein Rückkabel (23) für jede Spalte von Photovoltaikmodulen (1a, 1b,...) umfasst, das parallel zu den Schrägseiten von Photovoltaikmodulen (1a, 1b,...) verläuft, das den zweiten Anschlusskasten (15b) des letzten Photovoltaikmoduls (1a, 1b,...) der Spalte mit einem Elektrosammler oder mit dem ersten Modul einer nächsten Reihe verbindet.

5. Photovoltaikanordnung nach Anspruch 1, **dadurch gekennzeichnet, dass** die Photovoltaikzellen (13) in Zeilen parallel zu den Horizontalseiten eingerichtet sind, mit mindestens einer verbindenden Elektroschiene (17), umfassend Verbindungssegmente, die eine Photovoltaikzelle (13a) mit der nächsten (13b) in einer Zeile von Photovoltaikzellen (13) und die erste bzw. letzte Photovoltaikzelle (13a, 13b,...) der ersten bzw. letzten Zeile der Anordnung mit einem Anschlusskasten verbinden, und U-Profile, die die letzte Photovoltaikzelle (13a, 13b,...) einer Zeile mit der ersten Photovoltaikzelle (13a, 13b,...) der nächsten Zeile in der Anordnung verbinden.

6. Photovoltaikanordnung nach Anspruch 5, **dadurch gekennzeichnet, dass** die Photovoltaikmodule (1a, 1b,...) eine gerade Anzahl von Zeilen von Photovoltaikzellen (13) umfassen.

7. Photovoltaikanordnung nach dem vorhergehenden Anspruch, **dadurch gekennzeichnet, dass** das Rückkabel (23) und zumindest Anteile der Verbindungskabel (21) im Innern eines Kabelkanals (27) eingeschlossen sind, wobei der Kabelkanal (27) parallel zu den Schrägseiten der Photovoltaikmodule (1a, 1b,...) verläuft.

8. Photovoltaikanordnung nach einem der Ansprüche 1 bis 6, **dadurch gekennzeichnet, dass** die Photovoltaikmodule eine Rückelektroschiene (25) umfassen, die in dem Modul (1a, 1b,...) eingebettet ist und parallel zu der Schrägseite verläuft, wobei:
• die Rückelektroschiene (25) von einem Modul mit der Rückelektroschiene (25) des nächsten Moduls (1a, 1b,...) in der Spalte verbunden ist,
• wobei die Rückelektroschiene des ersten Photovoltaikmoduls (1a) in einer Spalte auch mit einem Sammelkabel (19) verbunden ist, und
• die Rückelektroschiene (25) des letzten Photovoltaikmoduls (1a, 1b,...) in einer Spalte mit dem zweiten Anschlusskasten (15b) des letzten Photovoltaikmoduls (1a, 1b,...) der Spalte verbunden ist.

9. Photovoltaikmodul zur Verwendung in einer Photovoltaikanordnung nach einem der vorhergehenden Ansprüche, **dadurch gekennzeichnet, dass** es Folgendes umfasst:
▪ ein Laminat (11) von rechteckiger Form, mit zwei Schrägseiten (SS), die, wenn installiert, parallel zu der Schräge (S) des Dachs platziert sind, und zwei Horizontalseiten (HS), die, wenn installiert, senkrecht zu der Schräge (S) platziert werden sollen,
▪ eine Vielzahl von Photovoltaikzellen (13), die in dem Laminat (11) angeordnet sind,
▪ mindestens zwei Monopolanschlusskästen (15a, 15b), eingerichtet auf der der Sonne zugewandten Seite der Photovoltaikmodule und umfassend einen ersten Anschlusskasten (15a), angebracht jeweils an der Ecke zwischen der ersten oder der zweiten Schrägseite (SS) und einer ersten Horizontalseite (HS), und einen zweiten Anschlusskasten (15b), angebracht an der Ecke zwischen derselben ersten oder zweiten Schrägseite (SS) und der zweiten Horizontalseite (HS), verbunden mit den Photovoltaikzellen (13), wobei sich die Anschlusskästen (15a, 15b) des Photovoltaikmoduls (1a, 1b,...) dicht an derselben Schrägseite (SS) des Photovoltaikmoduls (1a, 1b,...) befinden.

10. Photovoltaikmodul nach dem vorhergehenden Anspruch, **dadurch gekennzeichnet, dass** die Photovoltaikzellen (13a, 13b,...) in einer ungeraden Anzahl von Spalten parallel zu den Schrägseiten (SS) eingerichtet sind, mit mindestens einer verbindenden Elektroschiene (17), umfassend Verbindungssegmente, die eine Photovoltaikzelle (13a, 13b,...) mit der nächsten (13a, 13b,...) in einer Spalte und die erste bzw. letzte Photovoltaikzelle (13a, 13b,...) der ersten bzw. letzten Spalte der Anordnung mit einem Anschlusskasten (15a, 15b) verbinden, und U-Profile, die die letzte Photovoltaikzelle (13a, 13b,...) einer Spalte mit der ersten Photovoltaikzelle (13a, 13b,...) der nächsten Spalte in der Anordnung verbinden.

11. Photovoltaikmodul nach Anspruch 8, **dadurch gekennzeichnet, dass** die Photovoltaikzellen (13a, 13b,...) in einer geraden Anzahl von Zeilen parallel zu den Horizontalseiten (HS) eingerichtet sind, mit mindestens einer verbindenden Elektroschiene (17), umfassend Verbindungssegmente, die eine Photovoltaikzelle (13a, 13b,...) mit der nächsten Photovoltaikzelle (13a, 13b,...) in einer Zeile und die erste bzw. letzte Photovoltaikzelle (13a, 13b,...) der ersten bzw. letzten Zeile der Anordnung mit einem Anschlusskasten (15a, 15b) verbinden, und U-Profile, die die letzte Photovoltaikzelle (13a, 13b,...) einer Zeile mit der ersten Photovoltaikzelle (13a, 13b,...) der nächsten Zeile in der Anordnung verbinden.

12. Photovoltaikmodul nach einem der Ansprüche 8 bis 10, **dadurch gekennzeichnet, dass** das Photovoltaikmodul eine Rückelektroschiene (25) umfasst, die parallel zu dessen Schrägseite (SS) verläuft.

13. Wellplatte zur Installation auf einem Dach oder einer Struktur, **dadurch gekennzeichnet, dass** sie mindestens ein Photovoltaikmodul (1a, 1b,...) nach einem der Ansprüche 8 bis 11 umfasst, das an dessen Oberseite angebracht ist, wobei die Schrägseiten (SS) parallel zu Kämmen (31) der Wellplatte (29) verlaufen.

## Revendications

1. Ensemble photovoltaïque (100) destiné à être installé sur un toit pentu, comprenant
• une pluralité de modules photovoltaïques (1a, 1b, ...), agencés en au moins une colonne parallèle à la pente (S), chaque module photovoltaïque (1a, 1b, ...) comprenant :
▪ un stratifié (11) de forme rectangulaire, avec deux côtés pentus (SS) devant être placés parallèlement à la pente (S) du toit et deux côtés horizontaux (HS) devant être placés perpendiculairement à la pente (S),
▪ une pluralité de cellules photovoltaïques (13), disposées dans le stratifié (11),
▪ au moins deux boîtes de jonction unipolaires (15a, 15b) disposées sur le côté faisant face au soleil des modules photovoltaïques et comprenant une première boîte de jonction (15a) respectivement attachée au coin entre soit le premier, soit le deuxième côté pentu (SS) et un premier côté horizontal (HS), et une deuxième boîte de jonction (15b) attachée au coin entre le même premier ou deuxième côté pentu (SS) et le deuxième côté horizontal (HS), branchées aux cellules photovoltaïques (13), les boîtes de jonction (15a, 15b) des modules photovoltaïques (1a, 1b, ...) étant proches du même côté pentu (SS) des modules photovoltaïques (1a, 1b, ...),
• des câbles de branchement (21), cheminant entre la deuxième boîte de jonction (15b) d'un module photovoltaïque (1a, 1b, ...) et la première boîte de jonction (15a) du module photovoltaïque (1a, 1b, ...) suivant dans la colonne de modules photovoltaïques,
• des câbles de collecte (19), configurés pour brancher les modules photovoltaïques (1a, 1b, ...) à un collecteur électrique.

2. Ensemble photovoltaïque selon la revendication 1, **caractérisé en ce que** les cellules photovoltaïques (13) sont agencées en colonnes, parallèles aux côtés pentus, avec au moins un circuit électrique de branchement (17) comprenant des segments de branchement branchant une cellule photovoltaïque (13a) à la suivante (13b) dans une colonne de cellules photovoltaïques (13) et la première, respectivement dernière, cellule photovoltaïque (13a, 13b, ...) de la première, respectivement dernière, colonne de l'agencement à une boîte de jonction, et des formes en U, branchant la dernière cellule photovoltaïque (13a, 13b, ...) d'une colonne à la première cellule photovoltaïque (13a, 13b, ...) de la colonne suivante dans l'agencement.

3. Ensemble photovoltaïque selon la revendication 2, **caractérisé en ce que** les modules photovoltaïques (1a, 1b, ...) comprennent un nombre impair de colonnes de cellules photovoltaïques (13).

4. Ensemble photovoltaïque selon la revendication 1, **caractérisé en ce qu'**il comprend un câble de retour (23) pour chaque colonne de modules photovoltaïques (1a, 1b, ...), qui court parallèlement aux côtés pentus de modules photovoltaïques (1a, 1b, ...), branchant la deuxième boîte de jonction (15b) du dernier module photovoltaïque (1a, 1b, ...) de la colonne à un collecteur électrique ou au premier module d'une rangée suivante.

5. Ensemble photovoltaïque selon la revendication 1, **caractérisé en ce que** les cellules photovoltaïques (13) sont agencées en lignes, parallèles aux côtés horizontaux, avec au moins un circuit électrique de branchement (17) comprenant des segments de branchement branchant une cellule photovoltaïque (13a) à la suivante (13b) dans une ligne de cellules photovoltaïques (13) et la première, respectivement dernière, cellule photovoltaïque (13a, 13b, ...) de la première, respectivement dernière, ligne de l'agencement à une boîte de jonction, et des formes en U, branchant la dernière cellule photovoltaïque (13a, 13b, ...) d'une ligne à la première cellule photovoltaïque (13a, 13b, ...) de la ligne suivante dans l'agencement.

6. Ensemble photovoltaïque selon la revendication 5, **caractérisé en ce que** les modules photovoltaïques (1a, 1b, ...) comprennent un nombre pair de lignes de cellules photovoltaïques (13).

7. Ensemble photovoltaïque selon la revendication précédente, **caractérisé en ce que** le câble de retour (23) et au moins des parties des câbles de branchement (21) sont enfermés à l'intérieur d'une gaine de câble (27), la gaine de câble (27) étant parallèle aux côtés pentus des modules photovoltaïques (1a, 1b, ...).

8. Ensemble photovoltaïque selon l'une quelconque des revendications 1 à 6, **caractérisé en ce que** les modules photovoltaïques comprennent un circuit électrique de retour (25), incorporé dans le module (1a, 1b, ...) et parallèle au côté pentu, dans lequel :
• le circuit électrique de retour (25) d'un module est branché au circuit électrique de retour (25) du module suivant (1a, 1b, ...) dans la colonne,
• le circuit électrique de retour du premier module photovoltaïque (1a) dans une colonne étant également branché à un câble de collecte (19), et
• le circuit électrique de retour (25) du dernier module photovoltaïque (1a, 1b, ...) dans une colonne étant branché à la deuxième boîte de jonction (15b) dudit dernier module photovoltaïque (1a, 1b, ...) de la colonne.

9. Module photovoltaïque à utiliser dans un ensemble photovoltaïque selon l'une quelconque des revendications précédentes, **caractérisé en ce qu'**il comprend :
▪ un stratifié (11) de forme rectangulaire, avec deux côtés pentus (SS) placés, à l'installation, parallèlement à la pente (S) du toit et deux côtés horizontaux (HS) devant être placés, à l'installation, perpendiculairement à la pente (S),
▪ une pluralité de cellules photovoltaïques (13), disposées dans le stratifié (11),
▪ au moins deux boîtes de jonction unipolaires (15a, 15b) disposées sur le côté faisant face au soleil des modules photovoltaïques et comprenant une première boîte de jonction (15a) respectivement attachée au coin entre soit le premier, soit le deuxième côté pentu (SS) et un premier côté horizontal (HS), et une deuxième boîte de jonction (15b) attachée au coin entre le même premier ou deuxième côté pentu (SS) et le deuxième côté horizontal (HS), branchées aux cellules photovoltaïques (13), les boîtes de jonction (15a, 15b) des modules photovoltaïques (1a, 1b, ...) étant proches du même côté pentu (SS) des modules photovoltaïques (1a, 1b, ...) .

10. Module photovoltaïque selon la revendication précédente, **caractérisé en ce que** les cellules photovoltaïques (13a, 13b, ...) sont agencées en un nombre impair de colonnes, parallèles aux côtés pentus (SS), avec au moins un circuit électrique de branchement (17) comprenant des segments de branchement branchant une cellule photovoltaïque (13a, 13b, ...) à la cellule photovoltaïque suivante (13a, 13b, ...) dans une colonne et la première, respectivement dernière, cellule photovoltaïque (13a, 13b, ...) de la première, respectivement dernière, colonne de l'agencement à une boîte de jonction (15a, 15b), et des formes en U, branchant la dernière cellule photovoltaïque (13a, 13b, ...) d'une colonne à la première cellule photovoltaïque (13a, 13b, ...) de la colonne suivante dans l'agencement.

11. Module photovoltaïque selon la revendication 8, **caractérisé en ce que** les cellules photovoltaïques (13a, 13b, ...) sont agencées en un nombre pair de lignes, parallèles aux côtés horizontaux (HS), avec au moins un circuit électrique de branchement (17) comprenant des segments de branchement branchant une cellule photovoltaïque (13a, 13b, ...) à la cellule photovoltaïque suivante (13a, 13b, ...) dans une ligne et la première, respectivement dernière, cellule photovoltaïque (13a, 13b, ...) de la première, respectivement dernière, ligne de l'agencement à une boîte de jonction (15a, 15b), et des formes en U, branchant la dernière cellule photovoltaïque (13a, 13b, ...) d'une ligne à la première cellule photovoltaïque (13a, 13b, ...) de la ligne suivante dans l'agencement.

12. Module photovoltaïque selon l'une quelconque des revendications 8 à 10, **caractérisé en ce que** les modules photovoltaïques comprennent un circuit électrique de retour (25), parallèle à son côté pentu (SS).

13. Tôle ondulée, destinée à être installée sur un toit ou une structure, **caractérisée en ce qu'**elle comprend au moins un module photovoltaïque (1a, 1b, ...) selon l'une quelconque des revendications 8 à 11, attaché à son côté supérieur, avec les côtés pentus (SS) parallèles aux nervures (31) de la tôle ondulée (29).
